# EUROPÄISCHE PATENTSCHRIFT

(11) **EP 4 014 015 B1**
(45) Veröffentlichungstag und Bekanntmachung des Hinweises auf die Patenterteilung: **30.04.2025**
(21) Anmeldenummer: 20750619.7
(22) Anmeldetag: 28.07.2020
(51) Int. Cl.: B05B 12/00, B23K 26/03, B23K 26/342, B23K 26/70, G01F 25/10, G01F 13/00, G01F 9/00, G01F 15/00, B05B 7/14, B05B 12/08

(54) **VORRICHTUNG UND VERFAHREN ZUR MESSUNG EINES PULVERMASSENSTROMS FÜR DAS PULVERDÜSENAUFTRAGSCHWEISSEN**
METHOD AND DEVICE FOR MEASURING A POWDER MASS FLOW FOR POWDER CLADDING
PROCÉDÉ ET DISPOSITIF DE MESURE D'UN DÉBIT MASSIQUE DE POUDRE POUR PLACAGE DE POUDRE

(30) Priorität: 14.08.2019 DE 102019121948
(43) Veröffentlichungstag der Anmeldung: 22.06.2022
(73) Patentinhaber: DMG MORI Ultrasonic Lasertec GmbH, 55758 Stipshausen (DE)
(72) Erfinder: BAX, Benjamin, 87459 Pfronten (DE); KLEDWIG, Christian, 87435 Kempten (DE)
(74) Vertreter: MERH-IP Matias Erny Reichl Hoffmann Patentanwälte PartG mbB
(86) Internationale Anmeldenummer: PCT/EP2020/071273
(87) Internationale Veröffentlichungsnummer: WO 2021/028215

(56) Entgegenhaltungen:
- CN-A- 109 250 504
- DE-A1- 4 344 701
- US-A- 6 057 515
- US-B1- 6 940 037
- GRUNENWALD B ET AL: "GEREGELTE PULVERZUFUHR FUR DIE LASER-OBERFLACHEN-BEARBEITUNG MIT ZUSATZWERKSTOFFEN. ÖREGULATED POWDER SUPPLY FOR THE LASER SURFACE TREATMENT WITH ADDITIONAL MATERIALS", LASER UND OPTOELEKTRONIK, FACHVERLAG GMBH. STUTTGART, DE, vol. 25, no. 6, 1 December 1993 (1993-12-01), pages 71 - 77, XP000413467, ISSN: 0722-9003

## Beschreibung

### Technisches Feld

Die Neuerung bezieht sich auf eine Vorrichtung und auf ein Verfahren zur Messung eines Pulvermassenstroms für das Pulverdüsenauftragschweißen.

### Technischer Hintergrund

Das Pulverdüsenauftragschweißen hat als additives Fertigungsverfahren in den letzten Jahren zunehmend an Bedeutung gewonnen. Beim Pulverdüsenauftragschweißen wird Pulver gezielt in einen Laserbearbeitungsbereich zugeführt, wobei die Pulverzusammensetzung, insbesondere die verwendeten Materialien und die Pulverteilchengrößem, variieren kann. Bei manchen Herstellungsverfahren kann dabei der Pulverauftrag unter Schutzgasatmosphäre erfolgen.

Um einen gleichmäßigen Auftrag sowie einen qualitativ gleichmäßigen Flächenauftrag zu erreichen, ist es notwendig, dass das Pulver mit einer möglichst konstanten Pulvermasse in den Laserbearbeitungsbereich gefördert wird. Dabei kann der Pulvermassenstrom beispielsweise in Abhängigkeit der Pulverzusammensetzung variieren.

In der WO 2015/155116 A1 ist ein Verfahren gezeigt, bei dem ein Pulverstrahl testweise über verschiedene Blendenöffnungen in einem Laserbearbeitungsbereich gefördert wird. Zur Ermittlung des Pulvermassenstroms wird durch jede Blendenöffnung über eine vorbestimmte Zeitdauer ein Pulverstrahl in einen Bearbeitungsbereich gefördert. Der in den Bearbeitungsbereich geförderte Pulverstrahl wird in einem Messbecher gesammelt und die gesammelte Pulvermasse mittels einer Waage ermittelt. Mittels der gesammelten Pulvermasse wird eine Blende mit einem dazugehörigen Pulverstrahl zum Laserauftragsschweißen verwendet.

In der US 6 940 037 B1 ist ein Verfahren zum Laserauftragsschweißen gezeigt, bei dem ein Pulverstrom aus Pulverspeichern einem Prozesskopf zugeführt wird, wobei ein kalibrierter optischer Sensor zum Einsatz kommt, um eine Volumenstrom der geförderten Pulvermenge zu messen.

In EP 1 950 001 A1 ist ein Verfahren gezeigt, bei dem über einen vorgegebenen Zeitraum eine Pulvermasse in einen Hochenergiestrahl gefördert wird. Die Pulvermasse wird daraufhin gesammelt und eine relative Position des Pulverstrahls zum Hochenergiestrahl in Abhängigkeit der gesammelten Pulvermasse und eines vorgegebenen Wertes eingestellt. Vor diesem Hintergrund ist es eine Aufgabe der Erfindung, eine Vorrichtung bzw. ein Verfahren bereitzustellen, das die Messung des Pulvermassenstroms verbessert.

### Beschreibung der Erfindung

Die Aufgabe der Erfindung wird mit den Merkmalen des unabhängigen Patentanspruchs 1, sowie mit den Merkmalen des unabhängigen Patentanspruchs 10 gelöst. Die abhängigen Patentansprüche beziehen sich auf besondere Ausführungsformen der Erfindung. Die Erfindung bezieht sich auf eine Vorrichtung und ein Verfahren zur Messung des Pulvermassenstroms für das Pulverdüsenauftragschweißen.

Erfindungsgemäß umfasst die Vorrichtung mindestens einen Pulverdosierer, eine Steuereinheit, einen Pulvermassenstromsensor, eine Pulvermassenermittlungseinrichtung und einen Pulverschalter. In manchen Ausführungsformen kann der mindestens eine Pulverdosierer ein oder mehrere Förderbänder, ein oder mehrere Quetschventile, eine oder mehrere Förderscheiben und/oder einen oder mehrere Schneckenförderer beispielsweise umfassen.

In manchen Ausführungsformen kann die Steuereinheit aus mehreren Steuereinheiten bestehen. Eine Steuereinheit kann beispielsweise eine oder mehrere analoge und/oder digitale Schaltungen umfassen. In manchen Ausführungsformen kann die Steuereinheit dazu eingerichtet sein, eine oder mehrere Ausgangsparameter in Abhängigkeit von mindestens einem Eingangsparameter zu regeln.

Der Pulvermassenstromsensor kann beispielsweise über Gewichtsmessungen, Strahlendämpfungsmessungen, Reflexionsmessungen, etc. dazu eingerichtet sein, einen Pulvermassenstrom zu ermitteln.

Der Pulverschalter kann dazu eingerichtet sein, einen Pulvermassenstrom in Abhängigkeit einer Steuerung an verschiedene Abnehmer zu fördern. Abnehmer können dabei beispielsweise eine Waage als Pulvermassenermittlungseinrichtung und/oder ein Prozesskopf sein.

Erfindungsgemäß ist der mindestens eine Pulverdosierer dazu eingerichtet, eine Pulvermasse über den Pulvermassenstromsensor in Abhängigkeit des Pulverschalters auf eine Waage und/oder zu einem Prozesskopf zu fördern. Dies hat den Vorteil, dass ein Pulvermassenstrom eingestellt werden kann, ohne dass die Pulvermasse an den Prozesskopf gefördert wird. Zum anderen kann nach der Einstellung des Pulvermassenstroms (Arbeitsvorbereitung), in einfacher Art und Weise zum Pulverdüsenauftragschweißen übergegangen werden, da die Förderung des Pulvermassenstroms nicht unterbrochen wird. Eine Unterbrechung der Förderung kann insbesondere beim Einschalten zu Schwankungen in der Förderung der Pulvermasse führen.

Erfindungsgemäß ist die Steuereinheit dazu eingerichtet, basierend auf einem von der Waage gemessenen Pulvermassenstrom den Pulvermassenstromsensor zu kalibrieren. Mittels des Pulvermassenstromsensors kann der Pulvermassenstrom während des Pulvermassenauftragsschweißens überwacht werden. Eine Kalibrierung des Pulvermassenstromsensors kann zu einer erhöhten Genauigkeit bei der Überwachung des Pulvermassenstroms führen, da Änderungen der Pulvermasse, insbesondere einer Material- und/oder Schutzgaszusammensetzung, die sensorische Erfassung des Pulvermassenstroms mittels des Pulvermassenstromsensors beeinflussen können.

In manchen Ausführungsformen kann die Steuereinheit dazu eingerichtet sein, basierend auf dem von der Waage gemessenen Pulvermassenstrom und einem vorgegebenen Pulvermassenstrom den Pulverdosierer einzustellen. Dies hat den Vorteil, dass eine exakte Einstellung des Pulvermassenstroms auf einen vorgegebenen Pulvermassenstrom, insbesondere vor dem Pulverdüsenauftragschweißen *ex situ* möglich ist.

In manchen Ausführungsformen kann die Steuereinheit dazu eingerichtet sein, basierend auf dem vom Pulvermassenstromsensor detektierten Pulvermassenstrom und einem vorgegebenen Pulvermassenstrom den Pulverdosierer einzustellen. Dies hat den Vorteil, dass insbesondere während des Pulverdüsenauftragschweißens eine Überwachung des Pulvermassenstroms möglich ist. Da der Pulvermassenstromsensor mittels der Waage vor dem Pulverdüsenauftragschweißen kalibriert werden kann, ist eine präzise Überwachung des Pulvermassenstroms *in situ* während des Pulvermassenauftragsschweißens möglich.

In einer besonders effizienten Ausführungsform umfasst die Vorrichtung einen Fliehkraftabscheider, einen Schwerkraftabscheider und/oder einen Trägheitsabscheider zwischen Pulverschalter und Waage, zur Abscheidung der Pulvermasse von einem Gas oder Gasgemisch. Eine Abscheidung der Pulvermasse von einem Gas oder Gasgemisch ist auch mittels anderer Methoden denkbar. Eine Abscheidung der Pulvermasse von einem Gas oder Gasgemisch hat den Vorteil, dass eine Messung des Pulvermassenstroms mittels der Waage genauer wird. Beispielsweise das Schutzgas Helium hat eine geringere Dichte wie Luft, was dazu führt, dass es in einer mit Luft gefüllten Umgebung nach oben steigt. Dadurch kann beispielsweise ein Messergebnis der Waage auf Grund des Auftriebs des Gases oder einer Masse des Gases verfälscht werden. Ein Abscheiden der Pulvermasse von einem Gas oder Gasgemisch beugt dieser Messergebnisverfälschung vor.

In einer besonders robusten Ausführungsform kann die Steuereinheit dazu eingerichtet sein, den Pulvermassenstrom über ein oder mehrere Quetschventile zu steuern. Quetschventile haben den Vorteil, dass sie besonders robust gegenüber Verstopfungen sind und dass Druckstöße im Vergleich zu anderen regulierenden Ventilen verringert werden. Insbesondere bei einer Regelschleife, der Steuerung des Pulvermassenstroms zu einem Sollstrom, kann somit ein Oszillieren unterdrückt und somit eine Einschwingzeit verkürzt werden.

In einer besonders kostengünstigen Ausführungsform kann die Waage dazu eingerichtet sein, den Pulvermassenstrom durch das Messen einer in einem Zeitintervall abgeschiedenen Feststoffmasse zu messen. Das Messen der in einem Zeitintervall abgeschiedenen Feststoffmasse kann beispielsweise durch das Bilden einer Differenz ermittelt werden. In weiteren Ausführungsformen kann die Waage dazu erneut kalibriert beziehungsweise ein Nullwert entsprechend angepasst werden. Die Genauigkeit kann beispielsweise dadurch erhöht werden, indem das Zeitintervall vergrößert wird. Dies hat den Vorteil, dass eine relativ genaue Messung des Pulvermassenstroms mit geringem Aufwand erfolgt.

In einer besonderes effizienten Ausführungsform kann die Steuereinheit dazu eingerichtet sein, in einem Arbeitsvorbereitungsmodus die Schritte Einstellen einer Fördermenge des mindestens einen Pulverdosierers pro Zeiteinheit in Abhängigkeit eines vorgegebenen Pulvermassenstroms und in Abhängigkeit des von der Waage gemessenen Pulvermassenstroms und Kalibrieren des Pulvermassenstromsensors in Abhängigkeit des vorgegebenen Pulvermassenstroms und/oder des von der Waage gemessenen Pulvermassenstroms auszuführen. Dies hat den Vorteil, dass vor dem Pulverdüsenauftragschweißen der Pulvermassenstrom exakt mittels der Pulvermassenermittlungseinrichtung eingestellt wird und während dem Pulverdüsenauftragschweißen der Pulvermassenstrom überwacht wird. Da die Kalibrierung mit dem vorgegebenen Pulvermassenstrom erfolgt, kann die Genauigkeit bei der Überwachung des geförderten Pulvermassenstroms erhöht werden, insbesondere können dadurch nicht-lineare Fehler mit der Kalibrierung besser kompensiert werden. Ein Pulvermassenstrom, der eine geringere Abweichung von einem vorgegebenen Pulvermassenstrom aufweist, führt zu einem gleichmäßigeren Auftrag der Pulvermasse und einer erhöhten Qualität des Pulvermassenauftrags.

In einer besonders effizienten Ausführungsform kann die Steuereinheit dazu eingerichtet sein, zum Ausführen des Pulverdüsenauftragschweißens zumindest die folgenden Schritte auszuführen: Betätigen des Pulverschalters, um in einem Arbeitsmodus die Pulvermasse über den Pulvermassenstromsensor zum Prozesskopf zu fördern, und Überwachen des Pulvermassenstroms mittels des Pulvermassenstromsensors im Arbeitsmodus. Dies hat den Vorteil, dass von einem Arbeitsvorbereitungsmodus in einen Arbeitsmodus gewechselt werden kann, ohne dass die Pulvermassenförderung unterbrochen werden muss. Dadurch kann insbesondere zu Beginn des Arbeitsmodus ein Einschwingen des geförderten Pulvermassenstrom auf den vorgegebenen Pulvermassenstrom verhindert werden. Dies führt zu einer erhöhten Qualität des Pulvermassenauftrags, insbesondere wenn mit dem Pulverdüsenauftragschweißen begonnen wird.

In einer besonders automatisierten Ausführungsform kann die Steuereinheit dazu eingerichtet sein, vom Arbeitsmodus in den Arbeitsvorbereitungsmodus zu wechseln, wenn eine Abweichung zwischen dem vom Pulvermassenstromsensor detektierten Pulvermassenstrom und dem vorgegebenen Pulvermassenstrom einen vorgegebenen Wert übersteigt. Dies hat den Vorteil, dass das Pulverdüsenauftragschweißen unterbrochen wird, wenn der Pulvermassenauftrag zu stark von einem vorgegebenen Pulvermassenauftrag abweicht. Somit kann eine vorgegebene Qualität des Pulvermassenauftrags gewährleistet werden. Außerdem kann gleichzeitig der Pulvermassenstrom mit der Pulvermassenermittlungseinrichtung erneut eingestellt und/oder der Pulvermassenstromsensor erneut kalibriert werden. Außerdem hat dies den Vorteil, dass ein Fehler in der Kalibrierung des Pulvermassenstromsensor auf einfache Weise beseitigt werden kann. Somit kann auf automatisierte Weise, ein gewünschter Pulvermassenstrom beim Pulverdüsenauftragschweißen gewährleistet werden.

Die Vorrichtung kann gemäß der Erfindung dazu eingerichtet sein, das folgende Verfahren auszuführen.

Ein erfindungsgemäßes Verfahren umfasst die Schritte: Fördern einer Pulvermasse, Ermitteln des Pulvermassenstroms der geförderten Pulvermasse, Kalibrieren eines Pulvermassenstromsensors in Abhängigkeit vom ermittelten Pulvermassenstrom, Betätigen eines Pulverschalters zum Ändern der Förderrichtung von einer Ermittlungseinheit des Pulvermassenstroms zum Prozesskopf, Fördern der Pulvermasse mit einem vorgegebenen Pulvermassenstrom über den Pulvermassenstromsensor zum Prozesskopf, und Überwachen des Pulvermassenstroms mittels des Pulvermassenstromsensors.

Ein Pulvermassenstrom kann beispielsweise mit einer Waage ermittelt werden. Die Waage kann dafür dazu eingerichtet sein, eine über ein vorgegebenes Zeitintervall auf der Waage aufgebrachte Pulvermasse zu messen. Dies kann beispielsweise durch ein entsprechendes Setzen des Nullpunkts oder durch Bilden der Differenz zweier Messergebnisse erfolgen. Die Waage kann in manchen Ausführungsformen eine Pulvermassenaufnahme umfassen. In manchen Ausführungsformen kann die Waage dazu eingerichtet sein, die Pulvermassenaufnahme von einer Pulvermasse zu bereinigen.

In besonders genauen Ausführungsformen kann das Verfahren den Schritt Abscheiden der Pulvermasse von einem Gas oder einem Gasgemisch vor dem Ermitteln des Pulvermassenstroms umfassen. Dies hat den Vorteil, dass der von der Waage gemessene Pulvermassenstrom nicht durch ein Gas oder Gasgemisch verfälscht wird. Beispielsweise Helium hat eine geringere Masse als Luft und erzeugt dadurch einen Auftrieb in einem von Luft gefüllten Raum. Ist eine Pulvermasse mit Helium, beispielsweise als Schutzgas, gemischt, so wird die Waage einen geringeren Pulvermassenstrom messen, wenn die Pulvermasse nicht zuvor von dem Helium abgeschieden wird.

In besonders kostengünstigen Ausführungsformen kann der Pulvermassenstrom mittels einer Waage gemessen werden.

Das Betätigen des Pulverschalters zum Ändern der Förderrichtung von der Ermittlungseinheit des Pulvermassenstroms zum Prozesskopf hat den Vorteil, dass insbesondere zu Beginn des Pulverdüsenauftragschweißen ein Einschwingen bei der Pulvermassenförderung vermieden wird, da die Pulvermasse mit einem gleichmäßigen Pulvermassenstrom zur Ermittlungseinheit vor dem Pulverdüsenauftragschweißen gefördert wird.

In einer besonders vorteilhaften Ausführungsform kann die Fördermenge pro Zeiteinheit in Abhängigkeit des ermittelten Pulvermassenstroms der geförderten Pulvermasse und in Abhängigkeit eines vorgegebenen Pulvermassenstroms geregelt werden. Dies hat den Vorteil, dass der Pulvermassenstrom relativ exakt vor dem Pulverdüsenauftragschweißen eingestellt/geregelt werden kann. Je nach Ausführungsform kann dazu eine Steuereinheit beispielsweise eine entsprechende analoge oder digitale Regelung umfassen.

In einer besonders vorteilhaften Ausführungsform kann die Fördermenge pro Zeiteinheit in Abhängigkeit der Sensorwerte des Pulvermassenstromsensors und in Abhängigkeit eines vorgegebenen Pulvermassenstroms eingestellt werden. Dies hat den Vorteil, dass der geförderte Pulvermassenstrom während des Pulverauftragsschweißens entsprechend einem mittels dem Pulvermassenstromsensor detektiertem Pulvermassenstrom geregelt/eingestellt werden kann. Somit kann der geförderte Pulvermassenstrom während des Pulvermassenauftragschweißens nicht nur überwacht, sondern auch angepasst werden. Eine entsprechende Regelung/Steuerung kann beispielsweise mittels einer Steuereinheit und/oder einer analogen oder digitalen Schaltung realisiert werden.

In einer besonders automatisierten Ausführungsform kann das Verfahren erneut ausgeführt werden, wenn eine Abweichung des mittels des Pulvermassenstromsensors detektiertem Pulvermassenstroms von einem vorgegebenen Pulvermassenstrom einen vorgegebenen Wert übersteigt. Dies hat den Vorteil, dass automatisiert zwischen dem Pulverdüsenauftragschweißen und dem exakten Einstellen des Pulvermassenstroms umfassend das Kalibrieren des Pulvermassenstromsensors gewechselt wird, wenn davon auszugehen ist, dass der geförderte Pulvermassenstrom von dem vorgegebenen Pulvermassenstrom über einen Grenzwert abweicht. Ist eine Abweichung des Pulvermassenstroms von dem vorgegebenen Pulvermassenstrom kleiner als ein vorgegebener Wert, kann somit mit dem Pulverdüsenauftragschweißen fortgefahren werden.

### Beschreibung der Zeichnung

Figur 1 zeigt schematisch eine Vorrichtung zur Messung eines Pulvermassenstroms für das Pulverdüsenauftragschweißen gemäß einer Ausführungsform der Erfindung.
Figur 2 zeigt schematisch einen Prozessflussplan eines Verfahrens gemäß einer Ausführungsform der Erfindung.
Figur 3 zeigt schematisch einen Prozessflussplan eines Verfahrens zur Messung/Ermittlung des Pulvermassenstroms gemäß einer Ausführungsform der Erfindung.
Figur 4 zeigt schematisch eine Vorrichtung zur Messung eines Pulvermassenstroms für das Pulverdüsenauftragschweißen gemäß einer Ausführungsform der Erfindung.

In manchen Ausführungsformen können Komponenten zusammengefasst, in mehrere Komponenten aufgeteilt und/oder weitere Komponenten hinzugefügt werden, ohne die Funktionalität der Erfindung zu beeinflussen. In manchen Ausführungsformen können Verfahrensschritte in ihrer Reihenfolge vertauscht, parallel ausgeführt, zusammengefasst oder geteilt und/oder weitere Schritte hinzugefügt werden, ohne das erfindungsgemäße Verfahren in ihrer Funktion zu beeinflussen.

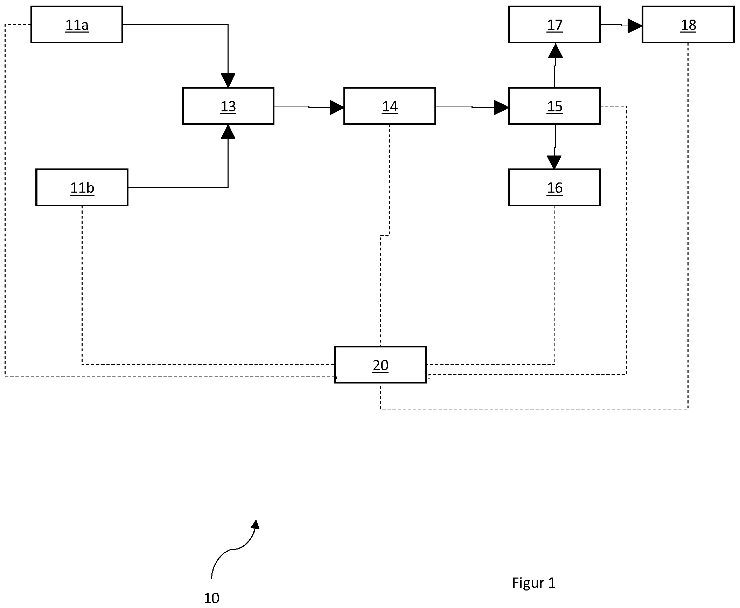

Figur 1 zeigt schematisch eine Vorrichtung 10 zur Messung eines Pulvermassenstroms für das Pulverdüsenauftragsschweißen gemäß einer Ausführungsform der Erfindung. In Figur 1 ist der Pulvermassenstrom schematisch mit durchgezogenen Pfeilen gezeigt. Gestrichelte Linien zeigen Verbindungen zum Signal und/oder Datenaustausch zwischen verschiedenen Komponenten. Die Verbindungen zur Signal- und/oder Datenübertragung können kabelgeführt und/oder über Funk ausgeführt sein.

In dieser Ausführungsform wird die Pulvermasse mittels zweier Pulverdosierer, den Pulverdosierern 11a und 11b, gefördert. Die Pulverdosierer sind dabei dazu eingerichtet einen Pulvermassenstrom zu erzeugen. Die Pulvermassenströme werden in einer Y-Verbindung 13 zu einem gemeinsamen Pulvermassenstrom zusammengefasst. In einer Ausführungsform mit einem Pulverdosierer kann die Y-Verbindung gegebenenfalls weggelassen werden. In manchen Ausführungsformen, insbesondere wenn die Vorrichtung mehrere Pulverdosierer umfasst, kann die Vorrichtung mehrere Y-Verbindungen und/oder alternativen wie Mischer oder n-fache Y-Verbindungen umfassen.

Der dadurch erzeugte gemeinsame Pulvermassenstrom wird über einen Pulvermassenstromsensor 14 an einen Pulverschalter 15 geleitet. In Abhängigkeit einer Ansteuerung des Pulverschalters 15 leitet dieser den Pulvermassenstrom an einen Prozesskopf 16 und/oder eine Waage 18. Der Pulverschalter wird in dieser Ausführung von der Steuereinheit 20 gesteuert.

In dieser Ausführungsform ist ein Pulverabscheider 17 zwischen Pulverschalter 15 und Waage 16 angebracht. Dieser kann dazu eingerichtet sein, das Pulver von einem Gas oder Gasgemisch, insbesondere einem Schutzgas, abzuscheiden.

Die Steuereinrichtung 20 kann in manchen Ausführungsformen aus mehreren, teilweise unabhängigen, Steuereinrichtungen bestehen. Die Steuereinrichtung ist in dieser Ausführungsform dazu eingerichtet die Pulverdosierer 11a, 11b in Abhängigkeit von Sensordaten des Pulvermassenstromsensors 14 und/oder in Abhängigkeit von Daten/Signalen der Waage 18 und einem vorgegebenen Pulvermassenstrom zu steuern und/oder regeln.

In dieser Ausführungsform ist die Steuereinheit 20 außerdem dazu eingerichtet, den Pulvermassenstromsensor 14 in Abhängigkeit von Daten/Signalen der Waage 18 und/oder einem vorgegebenen Pulvermassenstrom zu kalibrieren. Die Waage 18 kann beispielsweise dazu eingerichtet sein, einen Pulvermassenstrom durch das Messen einer in einem Zeitintervall auf die Waage 18 aufgebrachte Pulvermasse zu messen. Der Pulvermassenstrom ergibt sich dann, durch das Teilen der gemessenen Pulvermasse durch die Länge des Zeitintervalls.

In dieser Ausführungsform ist die Steuereinheit dazu eingerichtet den Prozesskopf zu steuern. Der Prozesskopf kann dazu eingerichtet sein in eine, zwei oder drei Richtungen bewegt zu werden. Der Prozesskopf kann in manchen Ausführungsformen eine Lasereinheit, die dazu eingerichtet ist, beim Pulverdüsenauftragschweißen eine vorgegebene Energie in einen Laserbearbeitungsbereich zu bringen, umfassen.

In manchen Ausführungsformen, ist die Steuereinheit dazu eingerichtet in einem Arbeitsvorbereitungsmodus den Pulvermassenstrom von dem mindestens einen Pulverdosierer 11a, 11b über die Pulvermassenstromsensoren 14 mittels des Pulverschalters zur Waage zu leiten. Im optionalen Pulvermassenabscheider, der der Waage vorgeschaltet ist, wird die Pulvermasse von Gasen und Gasgemischen abgeschieden. Die Steuereinheit ist in dieser Ausführungsform dazu eingerichtet, den mindestens einen Pulverdosierer 11a, 11b so zu regeln und steuern, dass ein vorgegebener Pulvermassenstrom mittels der Waage 18 gemessen wird. Ist der mindestens eine Pulverdosierer entsprechend eingestellt, kann der Pulvermassenstromsensor 14 kalibriert werden. Der Pulvermassenstromsensor kann beispielsweise optisch, mittels Strahlung oder kontaktbehaftet dazu eingerichtet sein, einen Pulvermassenstrom zu detektieren. In manchen Ausführungsformen werden einfacherweise die Sensordaten des Pulvermassenstromsensors entsprechend einer Kalibrierung angepasst.

Nach der Kalibrierung des Pulvermassenstromsensors kann in dieser Ausführungsform ein Pulverdüsenauftragschweißen ausgeführt werden. In dieser Ausführungsform wird um in den Arbeitsmodus, dem Pulverdüsenauftragschweißen, zu wechseln, der Pulverschalter 15 über ein Steuersignal betätigt, sodass der Pulvermassenstrom anstatt zur Waage an den Prozesskopf 16 gefördert wird. Dadurch kann ohne Unterbrechung der Pulvermassenförderung von einem Arbeitsvorbereitungsmodus in den Arbeitsmodus gewechselt werden.

Während des Pulverdüsenauftragschweißens wird der Pulvermassenstrom mittels des Pulvermassenstromsensors überwacht. Dadurch kann ein konstanter Pulvermassenstrom gewährleistet werden.

In manchen Ausführungsformen kann die Steuereinheit dazu eingerichtet sein, wenn eine Abweichung des vom Pulvermassenstromsensor detektierten Pulvermassenstroms von einem vorgegebenen Pulvermassenstrom einen vorgegebenen Grenzwert übersteigt, das Pulverdüsenauftragschweißen zu unter-, bzw. abzubrechen. Dazu kann der Pulverschalter 15 durch die Steuereinheit 20 betätigt werden, sodass der Pulvermassenstrom vom Pulverschalter 15 zur Waage 18 gefördert wird. Dann kann der Pulvermassenstrom erneut mittels der Waage eingestellt und bei Bedarf der Pulvermassenstromsensor kalibriert werden.

In manchen Ausführungsformen kann die Steuereinheit dazu eingerichtet sein, das Pulverdüsenauftragschweißen auf Grund eines externen Signals, beispielsweise eines Sensorsignals eines Sensors zum Überprüfen des Pulvermassenauftrags, zu unter-, beziehungsweise abzubrechen. Dies kann in manchen Ausführungen bedeuten, dass vom Arbeitsmodus in den Arbeitsvorbereitungsmodus gewechselt wird, beziehungsweise das Pulverdüsenauftragschweißen abgebrochen wird.

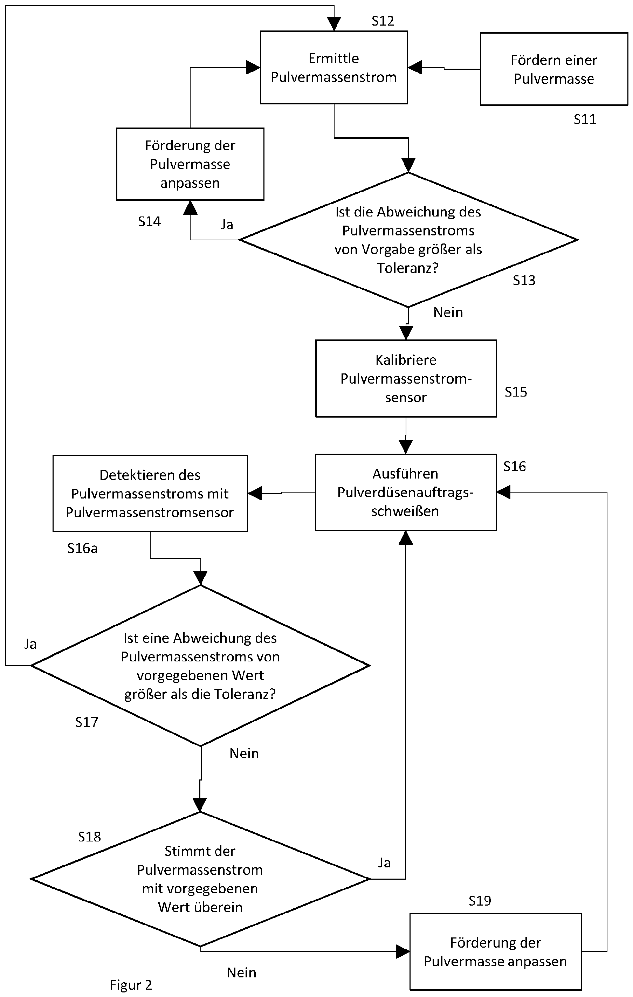

Figur 2 zeigt schematisch einen Prozessflussplan eines Verfahrens gemäß einer Ausführungsform der Erfindung. In einem ersten Schritt S11 wird eine Pulvermasse gefördert. Die Pulvermasse ist vorzugsweise zum Pulverdüsenauftragschweißen als Pulver geeignet. In einem zweiten Schritt S12 wird ein Pulvermassenstrom, der geförderten Pulvermasse ermittelt. In einem nächsten Schritt S13 wird in Abhängigkeit des ermittelten Pulvermassenstroms überprüft, ob der Pulvermassenstrom von einem vorgegebenen Pulvermassenstrom stärker als eine vorgegebene Toleranz abweicht. Ist die Abweichung größer als die Toleranz wird über den Schritt S14 die Förderung der Pulvermasse angepasst und der Pulvermassenstrom im Schritt S12 erneut ermittelt. Ist die Abweichung kleiner als die Toleranz, wird ein Pulvermassenstromsensor in einem Schritt S15 mittels des ermittelten Pulvermassenstroms kalibriert.

Auf Basis der Vorbereitungen zum Pulverdüsenauftragschweißen in den Schritten S11 bis S15 kann das Pulverdüsenauftragschweißen in einem Schritt S16 ausgeführt werden. Um von den Schritten der Vorbereitung zum Ausführen des Pulverdüsenauftragschweißen S16 zu wechseln, wird ein Pulverschalter zum Ändern der Förderrichtung anstatt zu einer Ermittlungseinheit zur Ermittlung des Pulvermassenstroms, siehe Schritt S12, zu einem Prozesskopf einer Pulverauftragschweißeinheit betätigt werden.

Während des Pulverdüsenauftragschweißens S16 wird der Pulvermassenstrom mittels des Pulvermassenstromsensors in den Schritten S16a, S17-S19 überwacht. Im Schritt S16a wird der Pulvermassenstrom mittels des Pulvermassenstromsensors detektiert. Im Schritt S17 wird überprüft, ob eine Abweichung des Pulvermassenstroms, der mittels des Pulvermassenstromsensors detektiert wird, von einem vorgegebenen Pulvermassenstrom größer als ein vorgegebener Toleranzwert ist. Ist die Abweichung größer wird das Pulverdüsenauftragschweißen unterbrochen und mit dem Schritt S12 Ermitteln des Pulvermassenstroms fortgefahren. Je nach Ausführungsform kann bei einem erneuten Durchlauf der Schritte S12 bis S16 der Schritt S15 Kalibrieren des Pulvermassenstromsensors übersprungen werden.

Ist die Abweichung des detektierten Pulvermassenstroms vom vorgegebenen Pulvermassenstrom im Toleranzbereich, wird in einem Schritt S18 überprüft, ob der detektierte Pulvermassenstrom mit dem vorgegebenen Wert übereinstimmt. Stimmt der detektierte Pulvermassenstrom mit dem vorgegebenen Pulvermassenstrom überein, wird mit Schritt S16 dem Ausführen des Pulverdüsenauftragschweißen fortgefahren. Stimmen die Werte nicht überein, wird in einem Schritt S19 die Förderung der Pulvermasse angepasst und ebenfalls mit dem Schritt S16 Ausführen des Pulvermassenauftragsschweißens fortgefahren.

In manchen Ausführungsformen, kann nach dem Schritt S18 mit dem Ausführen des Pulvermassenauftragsschweißen, Schritt S16, fortgefahren werden, wenn eine Abweichung des detektierten Pulvermassenstroms vom vorgegebenen Pulvermassenstrom unter einem weiteren Toleranzwert liegt. Ansonsten wird mit Schritt S19, dem Anpassen der Förderung der Pulvermasse, fortgefahren. In manchen Ausführungsformen können die Toleranzwerte des Schritts S17 und des Schritts S18 denselben Wert haben.

In manchen Ausführungsformen können unter anderem die Schritte S16, S16a, S17-S19, die das Überwachen des Pulvermassenstroms während des Pulvermassenauftragsschweißens mit dem Pulvermassenstromsensor umfassen, in anderer Reihenfolge, mit zusätzlichen Schritten, zumindest teilweise zusammengefasst etc. ausgeführt sein.

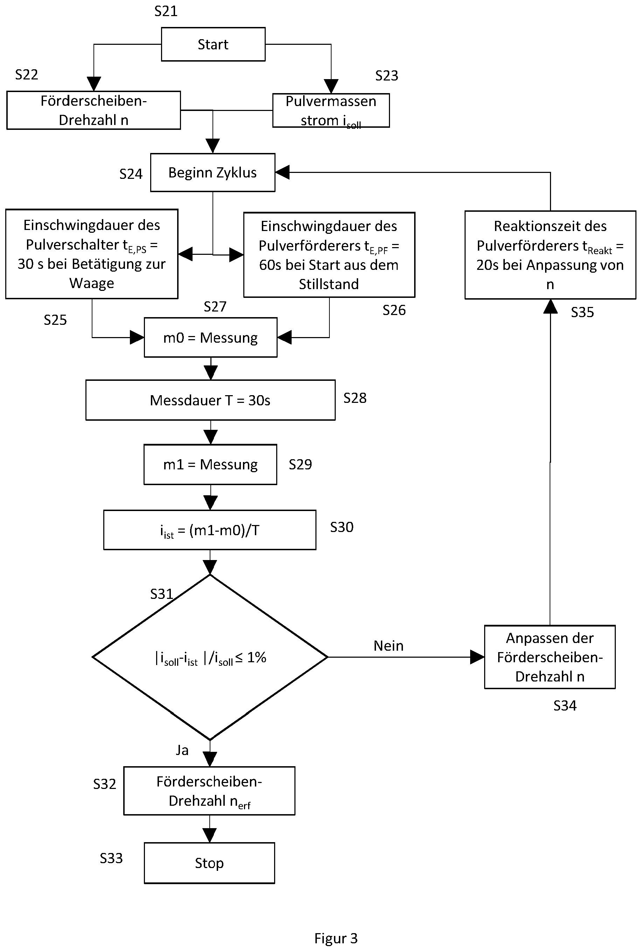

Figur 3 zeigt schematisch einen Prozessflussplan eines Verfahrens zur Messung/Ermittlung des Pulvermassenstroms gemäß einer Ausführungsform der Erfindung. Mit dem Start S21 des Verfahrens wird mittels einer Förderscheiben-Drehzahl n in einem Schritt S22 ein Pulvermassenstrom iᵢₛₜ erzeugt. In diesem Ausführungsbeispiel ist der Pulverdosierer eine Förderscheibe. In dieser Ausführungsform parallel dazu wird ein vorgegebener Pulvermassenstrom iₛₒₗₗ übergeben. Nach dem Beginn des Verfahrens wird mit dem Messzyklus S24 begonnen.

In Abhängigkeit, ob mit dem Zyklus gerade begonnen wurde, was einschließt, dass der Pulverschalter zur Waage betätig wurde, wird der Schritt S26 oder der Schritt S25 ausgeführt. Ist mit dem Zyklus aus dem Stillstand begonnen worden, wird das Einschwingen des Pulverförderers/Pulverdosierers, in diesem Ausführungsbeispiel 60 Sekunden, im Schritt S26 abgewartet. Wird der Pulverschalter zur Waage betätigt, wird eine Einschwingdauer des Pulverschalters, in diesem Ausführungsbeispiel 30 Sekunden, im Schritt S25 abgewartet. Ist weder der Pulverschalter betätigt worden, noch der Pulverförderer aus dem Stillstand aktiviert worden, so können die Schritte S25 und S26 übersprungen werden.

In einem nächsten Schritt S27 wird eine erste Messung einer Pulvermasse m0 auf einer Waage vorgenommen. In einem weiteren Schritt S28 wird ein Zeitintervall/Messdauer T, in diesem Ausführungsbeispiel 30 Sekunden, abgewartet. Während des Zeitintervalls/Messdauer T wird der Pulvermassenstrom auf die Waage gefördert. Daraufhin wird eine zweite Messung der Pulvermasse m1 in einem Schritt S29 vorgenommen. Im nächsten Schritt S30 wird der Pulvermassenstrom mittels der Gleichung iᵢₛₜ = (m1 - m0)/T ermittelt.

In einem weiteren Schritt S31 wird eine Abweichung des Pulvermassenstroms iᵢₛₜ vom vorgegebenen Pulvermassenstrom ermittelt. In diesem Ausführungsbeispiel wird die Abweichung mittels der Formel | iₛₒₗₗ - iᵢₛₜ|/iₛₒₗₗ ermittelt. Ist die Abweichung unter einer vorgegebenen Toleranz, in diesem Ausführungsbeispiel 1%, so ist die Förderscheibendrehzahl n_{erf} um den vorgegebenen Pulvermassenstrom iₛₒₗₗ zu fördern mit der Förderscheibendrehzahl n vorgegeben und die Messung/Ermittlung des Pulvermassenstroms i kann im Schritt S33 abgeschlossen werden.

Ist die Abweichung größer als die vorgegebene Toleranz, wird in einem Schritt S34 die Drehzahl der Förderscheibe n angepasst. Je nach Ausführungsform kann eine Reaktionszeit des Pulverdosierers, in diesem Ausführungsbeispiel 20 Sekunden, in einem Schritt S35 abgewartet werden bevor mit dem Zyklus mit Schritt S24 erneut begonnen wird.

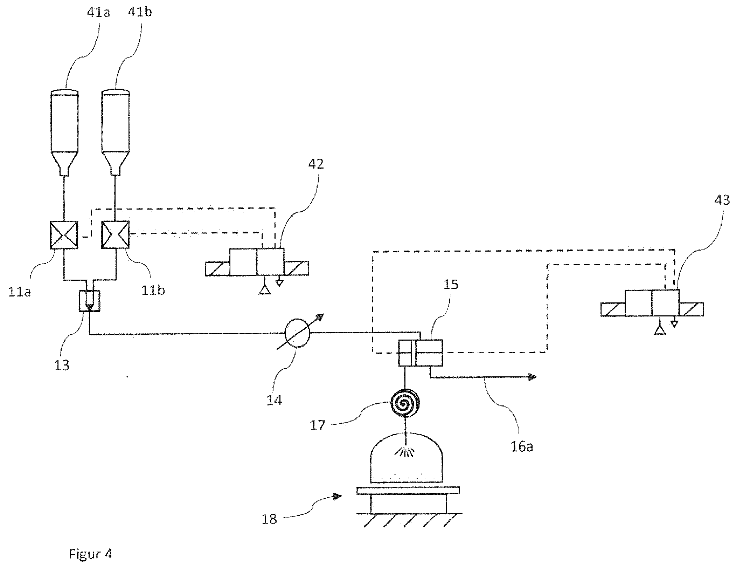

Figur 4 zeigt schematisch eine Vorrichtung zur Messung eines Pulvermassenstroms für das Pulverdüsenauftragschweißen gemäß einer Ausführungsform der Erfindung. In dieser Ausführungsform dosieren Quetschventile 11a, 11b das von Pulverförderern 41a, 41b geförderte Pulver. Die dadurch entstehenden Pulverströme werden mittels der Y-Verbindung 13 zu einem Strom vereint. In diesem Ausführungsbeispiel werden die Quetschventile über das Wegeventil zur Ansteuerung eines oder mehrerer Dosierer gesteuert. Der Pulvermassenstrom wird von der Y-Verbindung 13 über den Pulvermassenstromsensor 14 zum Pulverschalter 15 gefördert.

Der Pulverschalter 15 kann wie in dieser Ausführungsform gezeigt mittels dem Wegeventil zur Ansteuerung des Pulverschalters 43 gesteuert werden. Eine mögliche Stellung ist dabei, dass der Pulvermassenstrom zum Prozesskopf 16 über den Pulvertransport 16a gefördert wird. In einer weiteren möglichen Stellung wird der Pulvermassenstrom auf eine Waage 18 gefördert wird. Dabei kann auf dem Förderweg zwischen Waage 18 und Pulverschalter 15 ein Pulverabscheider 17 angeordnet sein. In manchen Ausführungsformen können das Wegeventil zur Ansteuerung eines oder mehrerer Dosierers 42, das Wegeventil zur Ansteuerung des Pulverschalters, die Waage 18, der Massenstromsensor 14, der Pulverabscheider und/oder der Prozesskopf beispielsweise über eine oder mehrere Steuereinheiten miteinander verbunden sein.

Die Steuereinheit kann beispielsweise dazu eingerichtet sein, mittels des Wegeventils zur Ansteuerung eines oder mehrerer Dosierer 42 basierend auf von dem Pulvermassenstromsensor 14 und/oder der Waage 18 bereitgestellten Daten/Signalen den Pulvermassenstrom zu steuern/regeln. In manchen Ausführungsformen kann die Steuereinheit dazu eingerichtet sein, mittels dem Wegeventil zur Ansteuerung des Pulverschalters den Pulverschalter zu steuern und somit zwischen einem Arbeitsvorbereitungsmodus und einem Arbeitsmodus des Pulverdüsenauftragschweißens zu wechseln.

Im Arbeitsvorbereitungsmodus kann mittels der Waage 18, dem Wegeventil zur Ansteuerung eines oder mehrerer Dosierer 42 und einem oder mehrerer Dosierer 11a, 11b ein vorgegebener Pulvermassenstrom eingestellt werden. Vorzugsweise nach dem Einstellen des Pulvermassenstroms kann der Pulvermassenstromsensor 14 kalibriert werden. Um dann in den Arbeitsmodus ohne Unterbrechung zu wechseln, kann durch Betätigen des Wegeventils zur Ansteuerung des Pulverschalters 43 der Pulvermassenstrom an den Prozesskopf 16 gefördert werden. Während das Pulver an den Prozesskopf 16 gefördert wird, kann mittels des Pulvermassenstromsensors 14 der geförderte Pulvermassenstrom überwacht werden.

In manchen Ausführungsformen kann die Steuereinheit dazu eingerichtet sein, wenn der Pulvermassenstromsensor 14 eine zu starke Abweichung von einem vorgegebenen Wert detektiert, dass automatisiert in den Arbeitsvorbereitungsmodus gewechselt wird und der Pulvermassenstrom erneut eingestellt wird. Dies hat den Vorteil, dass, wenn beispielsweise unter dem Pulverdüsenauftragschweißen Pulver einer ersten Charge ausgeht und Pulver einer zweiten Charge gefördert wird, gewährleistet ist, dass der Pulvermassenstrom einem Sollwert entspricht.

### BEZUGSZEICEHNLISTE

- 11a, 11b: Pulverdosierer
- 13: Y-Verbindung
- 14: Pulvermassenstromsensor
- 15: Pulverschalter
- 16: Prozesskopf
- 16a: Pulvertransport zum Prozesskopf 16
- 17: Pulverabscheider
- 18: Waage
- 20: Steuereinheit
- 41a, 41b: Pulverförderer
- 42: Wegeventil zur Ansteuerung eines oder mehrerer Dosierer
- 43: Wegeventil zur Ansteuerung des Pulverschalters
- iᵢₛₜ: gemessener/detektierter Pulvermassenstrom
- iₛₒₗₗ: vorbestimmter Pulvermassenstrom
- T: Zeitintervall/Messdauer
- m0: erste Gewichtsmessung
- m1: zweite Gewichtsmessung
- n: Drehzahl der Förderscheibe
- n_{erf}: Förderscheibendrehzahl um iₛₒₗₗ zu fördern

## Patentansprüche

1. Vorrichtung (10) zur Messung eines Pulvermassenstroms für das Pulverdüsenauftragschweißen umfassend:
- mindestens einen Pulverdosierer (11a, 11b),
- eine Steuereinheit (20),
- einen Pulvermassenstromsensor (14),
- eine Pulvermassenermittlungseinrichtung (18), und
- einen Pulverschalter (15),
wobei der mindestens eine Pulverdosierer (11a, 11b) dazu eingerichtet ist, eine Pulvermasse über den Pulvermassenstromsensor (14) in Abhängigkeit des Pulverschalters (15) auf eine Pulvermassenermittlungseinrichtung (18) und/oder zu einem Prozesskopf (16) zu fördern, und
wobei die Steuereinheit (20) dazu eingerichtet ist, basierend auf einem von der Pulvermassenermittlungseinrichtung (18) gemessenen Pulvermassenstrom den Pulvermassenstromsensor (14) zu kalibrieren.

2. Vorrichtung nach Anspruch 1, wobei
die Steuereinheit (20) dazu eingerichtet ist, basierend auf dem von der Pulvermassenermittlungseinrichtung (18) gemessenen Pulvermassenstrom und einem vorgegebenen Pulvermassenstrom den Pulverdosierer (11a, 11b) einzustellen.

3. Vorrichtung nach einem der Ansprüche 1 oder 2, wobei
die Steuereinheit (20) dazu eingerichtet ist, basierend auf dem vom Pulvermassenstromsensor (14) detektierten Pulvermassenstrom und einem vorgegebenen Pulvermassenstrom den Pulverdosierer (11a, 11b) einzustellen.

4. Vorrichtung nach einem der Ansprüche 1 bis 3 umfassend
einen Fliehkraftabscheider, einen Schwerkraftabscheider und/oder einen Trägheitsabscheider (17) zwischen Pulverschalter (15) und Pulvermassenermittlungseinrichtung (18), zur Abscheidung der Pulvermasse von einem Gas oder Gasgemisch.

5. Vorrichtung nach einem der Ansprüche 1 bis 4, wobei
die Steuereinheit (20) dazu eingerichtet ist, den Pulvermassenstrom über ein oder mehrere Quetschventile (11a, 11b) zu steuern.

6. Vorrichtung nach einem der Ansprüche 1 bis 5, wobei
die Pulvermassenermittlungseinrichtung (18) dazu eingerichtet ist, den Pulvermassenstrom durch das Messen einer in einem Zeitintervall abgeschiedenen Feststoffmasse zu messen.

7. Vorrichtung nach einem der Ansprüche 1 bis 6, wobei
die Steuereinheit (20) dazu eingerichtet ist, in einem Arbeitsvorbereitungsmodus die folgenden Schritte auszuführen:
- Einstellen einer Fördermenge des mindestens einen Pulverdosierers (11a, 11b) pro Zeiteinheit in Abhängigkeit eines vorgegebenen Pulvermassenstroms und in Abhängigkeit des von der Pulvermassenermittlungseinrichtung (18) gemessenen Pulvermassenstroms, und
- Kalibrieren des Pulvermassenstromsensors (14) in Abhängigkeit des vorgegebenen Pulvermassenstroms und/oder des von der Pulvermassenermittlungseinrichtung (18) gemessenen Pulvermassenstroms.

8. Vorrichtung nach einem der Ansprüche 1 bis 7, wobei
die Steuereinheit (20) dazu eingerichtet ist, zum Ausführen des Pulverdüsenauftragschweißens zumindest die folgenden Schritte auszuführen:
- Betätigen des Pulverschalters (15), um in einem Arbeitsmodus die Pulvermasse über den Pulvermassenstromsensor (14) zum Prozesskopf zu fördern (16), und
- Überwachen des Pulvermassenstroms mittels des Pulvermassenstromsensors (14) im Arbeitsmodus.

9. Vorrichtung nach Anspruch 8, wobei
die Steuereinheit (20) dazu eingerichtet ist, vom Arbeitsmodus in den Arbeitsvorbereitungsmodus zu wechseln, wenn eine Abweichung zwischen dem vom Pulvermassenstromsensor (14) detektierten Pulvermassenstrom und dem vorgegebenen Pulvermassenstrom einen vorgegebenen Wert übersteigt.

10. Verfahren zur Messung eines Pulvermassenstroms für das Pulverdüsenauftragsschweißen umfassend die Schritte:
Fördern einer Pulvermasse,
Ermitteln des Pulvermassenstroms der geförderten Pulvermasse,
Kalibrieren eines Pulvermassenstromsensors in Abhängigkeit vom ermittelten Pulvermassenstrom,
Betätigen eines Pulverschalters zum Ändern der Förderrichtung von einer Ermittlungseinheit des Pulvermassenstroms zum Prozesskopf,
Fördern der Pulvermasse mit einem vorgegebenen Pulvermassenstrom über den Pulvermassenstromsensor zum Prozesskopf, und
Überwachen des Pulvermassenstroms mittels des Pulvermassenstromsensors.

11. Verfahren nach Anspruch 10 umfassend den Schritt:
Abscheiden der Pulvermasse von einem Gas oder einem Gasgemisch vor dem Ermitteln des Pulvermassenstroms.

12. Verfahren nach einem der Ansprüche 10 oder 11, wobei
der Pulvermassenstrom mittels einer Waage gemessen wird.

13. Verfahren nach einem der Ansprüche 10 bis 12, wobei
die Fördermenge pro Zeiteinheit in Abhängigkeit des ermittelten Pulvermassenstroms der geförderten Pulvermasse und in Abhängigkeit eines vorgegebenen Pulvermassenstroms geregelt wird, und/oder wobei
die Fördermenge pro Zeiteinheit in Abhängigkeit der Sensorwerte des Pulvermassenstromsensors und in Abhängigkeit eines vorgegebenen Pulvermassenstroms eingestellt wird.

14. Verfahren nach einem der Ansprüche 10 bis 13, wobei
das Verfahren erneut ausgeführt wird, wenn eine Abweichung des mittels dem Pulvermassenstromsensor detektiertem Pulvermassenstroms von einem vorgegebenen Pulvermassenstrom einen vorgegebenen Wert übersteigt.

## Claims

1. Device (10) for measuring a powder mass flow for powder cladding, comprising:
- at least one powder metering device (11a, 11b),
- a control unit (20),
- a powder mass flow sensor (14),
- a powder mass determination device (18), and
- a powder switch (15),
wherein the at least one powder metering device (11a, 11b) is configured to convey a powder mass via the powder mass flow sensor (14) as a function of the powder switch (15) to a powder mass determination device (18) and/or to a process head (16), and
wherein the control unit (20) is configured to calibrate the powder mass flow sensor (14) on the basis of a powder mass flow measured by the powder mass determination device (18).

2. Device according to Claim 1, wherein
the control unit (20) is configured to set the powder metering device (11a, 11b) on the basis of the powder mass flow measured by the powder mass determination device (18) and a predefined powder mass flow.

3. Device according to either of Claims 1 and 2, wherein
the control unit (20) is configured to set the powder metering device (11a, 11b) on the basis of the powder mass flow detected by the powder mass flow sensor (14) and a predefined powder mass flow.

4. Device according to one of Claims 1 to 3, comprising
a centrifugal separator, a gravity separator and/or an inertial separator (17) between the powder switch (15) and the powder mass determination device (18), for separating the powder mass from a gas or gas mixture.

5. Device according to one of Claims 1 to 4, wherein
the control unit (20) is configured to control the powder mass flow via one or more pinch valves (11a, 11b).

6. Device according to one of Claims 1 to 5, wherein
the powder mass determination device (18) is configured to measure the powder mass flow by measuring a solid mass deposited in a time interval.

7. Device according to one of Claims 1 to 6, wherein
the control unit (20) is configured to carry out the following steps in a working preparation mode:
- setting a conveyed quantity of the at least one powder metering device (11a, 11b) per unit of time as a function of a predefined powder mass flow and as a function of the powder mass flow measured by the powder mass determination device (18), and
- calibrating the powder mass flow sensor (14) as a function of the predefined powder mass flow and/or of the powder mass flow measured by the powder mass determination device (18).

8. Device according to one of Claims 1 to 7, wherein
the control unit (20) is configured to carry out at least the following steps in order to carry out the powder cladding:
- actuating the powder switch (15) in order, in a working mode, to convey the powder mass via the powder mass flow sensor (14) to the process head (16), and
- monitoring the powder mass flow by means of the powder mass flow sensor (14) in the working mode.

9. Device according to Claim 8, wherein
the control unit (20) is configured to change from the working mode to the working preparation mode if a deviation between the powder mass flow detected by the powder mass flow sensor (14) and the predefined powder mass flow exceeds a predefined value.

10. Method for measuring a powder mass flow for powder cladding, comprising the steps of:
conveying a powder mass,
determining the powder mass flow of the conveyed powder mass,
calibrating a powder mass flow sensor as a function of the determined powder mass flow,
actuating a powder switch for changing the conveying direction from a determination unit of the powder mass flow to the process head,
conveying the powder mass with a predefined powder mass flow via the powder mass flow sensor to the process head, and
monitoring the powder mass flow by means of the powder mass flow sensor.

11. Method according to Claim 10, comprising the step of:
separating the powder mass from a gas or a gas mixture before determining the powder mass flow.

12. Method according to either of Claims 10 and 11, wherein
the powder mass flow is measured by means of a balance.

13. Method according to one of Claims 10 to 12, wherein
the conveyed quantity per unit of time is regulated as a function of the determined powder mass flow of the conveyed powder mass and as a function of a predefined powder mass flow, and/or wherein
the conveyed quantity per unit of time is set as a function of the sensor values of the powder mass flow sensor and as a function of a predefined powder mass flow.

14. Method according to one of Claims 10 to 13, wherein
the method is carried out again if a deviation of the powder mass flow detected by means of the powder mass flow sensor from a predefined powder mass flow exceeds a predefined value.

## Revendications

1. Dispositif (10) de mesure d'un débit massique de poudre pour le soudage par revêtement en poudre, comprenant :
- au moins un doseur de poudre (11a, 11b),
- une unité de commande (20),
- un capteur de débit massique de poudre (14),
- un dispositif de détermination de masse de poudre (18), et
- un commutateur de poudre (15),
dans lequel l'au moins un doseur de poudre (11a, 11b) est conçu pour transporter une masse de poudre par le biais du capteur de débit massique de poudre (14) en fonction du commutateur de poudre (15) vers un dispositif de détermination de masse de poudre (18) et/ou vers une tête de processus (16), et
dans lequel l'unité de commande (20) est conçue pour calibrer le capteur de débit massique de poudre (14) sur la base d'un débit massique de poudre mesuré par le dispositif de détermination de masse de poudre (18).

2. Dispositif selon la revendication 1, dans lequel
l'unité de commande (20) est conçue pour régler le doseur de poudre (11a, 11b) sur la base du débit massique de poudre mesuré par le dispositif de détermination de masse de poudre (18) et d'un débit massique de poudre prédéfini.

3. Dispositif selon l'une quelconque des revendications 1 ou 2, dans lequel
l'unité de commande (20) est conçue pour régler le doseur de poudre (11a, 11b) sur la base du débit massique de poudre détecté par le capteur de débit massique de poudre (14) et d'un débit massique de poudre prédéfini.

4. Dispositif selon l'une quelconque des revendications 1 à 3, comprenant
un séparateur centrifuge, un séparateur de gravité et/ou un séparateur inertiel (17) entre le commutateur de poudre (15) et le dispositif de détermination de masse de poudre (18), pour séparer la masse de poudre d'un gaz ou d'un mélange de gaz.

5. Dispositif selon l'une quelconque des revendications 1 à 4, dans lequel
l'unité de commande (20) est conçue pour commander le débit massique de poudre par le biais d'une ou de plusieurs soupapes à manchon (11a, 11b).

6. Dispositif selon l'une quelconque des revendications 1 à 5, dans lequel
le dispositif de détermination de masse de poudre (18) est conçu pour mesurer le débit massique de poudre par la mesure d'une masse de solides séparée dans un intervalle de temps.

7. Dispositif selon l'une quelconque des revendications 1 à 6, dans lequel
l'unité de commande (20) est conçue pour exécuter les étapes suivantes dans un mode de préparation de travail :
- réglage d'une quantité de transport de l'au moins un doseur de poudre (11a, 11b) par unité de temps en fonction d'un débit massique de poudre prédéfini et en fonction du débit massique de poudre mesuré par le dispositif de détermination de masse de poudre (18), et
- calibrage du capteur de débit massique de poudre (14) en fonction du débit massique de poudre prédéfini et/ou du débit massique de poudre mesuré par le dispositif de détermination de masse de poudre (18).

8. Dispositif selon l'une quelconque des revendications 1 à 7, dans lequel
l'unité de commande (20) est conçue pour exécuter au moins les étapes suivantes pour exécuter le soudage par revêtement en poudre:
- actionnement du commutateur de poudre (15) pour transporter dans un mode de travail la masse de poudre par le biais du capteur de débit massique de poudre (14) vers la tête de processus (16), et
- surveillance du débit massique de poudre au moyen du capteur de débit massique de poudre (14) dans le mode de travail.

9. Dispositif selon la revendication 8, dans lequel
l'unité de commande (20) est conçue pour passer du mode de travail au mode de préparation de travail lorsqu'un écart entre le débit massique de poudre détecté par le capteur de débit massique de poudre (14) et le débit massique de poudre prédéfini dépasse une valeur prédéfinie.

10. Procédé de mesure d'un débit massique de poudre pour le soudage par revêtement en poudre, comprenant les étapes suivantes :
transport d'une masse de poudre,
détermination du débit massique de poudre de la masse de poudre transportée,
calibrage d'un capteur de débit massique de poudre en fonction du débit massique de poudre déterminé,
actionnement d'un commutateur de poudre pour modifier la direction de transport d'une unité de détermination du débit massique de poudre vers la tête de processus,
transport de la masse de poudre avec un débit massique de poudre prédéfini par le biais du capteur de débit massique de poudre vers la tête de processus, et
surveillance du débit massique de poudre au moyen du capteur de débit massique de poudre.

11. Procédé selon la revendication 10, comprenant l'étape suivante :
séparation de la masse de poudre d'un gaz ou d'un mélange de gaz avant la détermination du débit massique de poudre.

12. Procédé selon l'une quelconque des revendications 10 ou 11, dans lequel
le débit massique de poudre est mesuré au moyen d'une balance.

13. Procédé selon l'une quelconque des revendications 10 à 12, dans lequel
la quantité de transport par unité de temps est régulée en fonction du débit massique de poudre déterminé de la masse de poudre transportée et en fonction d'un débit massique de poudre prédéfini, et/ou dans lequel
la quantité de transport par unité de temps est réglée en fonction des valeurs de capteur du capteur de débit massique de poudre et en fonction d'un débit massique de poudre prédéfini.

14. Procédé selon l'une quelconque des revendications 10 à 13, dans lequel
le procédé est à nouveau exécuté lorsqu'un écart entre le débit massique de poudre détecté au moyen du capteur de débit massique de poudre et un débit massique de poudre prédéfini dépasse une valeur prédéfinie.
